(19) Europäisches Patentamt / European Patent Office / Office européen des brevets

(11) **EP 4 632 335 A1**

(12) **EUROPEAN PATENT APPLICATION**
published in accordance with Art. 153(4) EPC

(43) Date of publication:
**15.10.2025 Bulletin 2025/42**

(21) Application number: 23900333.8

(22) Date of filing: **24.10.2023**

(51) International Patent Classification (IPC):
**G01G 3/16** (2006.01)        **G01N 35/04** (2006.01)
**G01N 35/10** (2006.01)

(52) Cooperative Patent Classification (CPC):
**G01G 3/16; G01N 35/04; G01N 35/10**

(86) International application number:
**PCT/JP2023/038372**

(87) International publication number:
**WO 2024/122211 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.12.2022 JP 2022194709**

(71) Applicant: HITACHI HIGH-TECH CORPORATION
Tokyo 105-6409 (JP)

(72) Inventors:
• **NAKAMURA Yoshihide**
  **Tokyo 100-8280 (JP)**
• **TANOUE Hidetsugu**
  **Tokyo 105-6409 (JP)**
• **TAKAKURA Tatsuki**
  **Tokyo 105-6409 (JP)**

(74) Representative: **Mewburn Ellis LLP**
**Aurora Building**
**Counterslip**
**Bristol BS1 6BX (GB)**

(54) **AUTOMATIC ANALYSIS DEVICE AND MASS SENSOR**

(57)    The present disclosure ensures reliability of analysis results by accurately pipetting a specimen and a sample in a predetermined pipetting amount. An automatic analysis device includes: a reagent holder configured to hold a reagent container that contains a reagent; a specimen holder configured to hold a specimen container that contains a specimen; a pipetting mechanism configured to pipette the reagent and the specimen into a reaction container; and a mass sensor configured to measure a mass of the reaction container. The mass sensor includes: a fixing portion; a diaphragm at least a part of which is fixed by the fixing portion; a piezoelectric element joined to the diaphragm; and a container placement portion that is supported on the diaphragm and is configured to hold the reaction container into which a liquid to be measured is discharged.

*FIG. 2*

EP 4 632 335 A1

**Description**

Technical Field

The present invention relates to an automatic analysis device and a mass sensor.

Background Art

Quantitative measurements are clinically performed for concentrations of chemical substances, such as proteins, lipids, sugars, ions, and various components constituting them, contained in body fluids such as blood and urine. An automatic analysis device is known as a device for automating processes (such as aliquoting of a specimen sample, mixing with a reagent, determination of a reaction result, and measurement of a change in a substance contained in the reagent) necessary for the measurements.

The automatic analysis device performs component analysis of a specimen by reacting a specified amount of the specimen with a reagent in a reaction container and measuring an absorbance and a luminescence amount of the specimen. The device has a pipetting mechanism mounted therein to dispense the specimen and the reagent into the reaction container. The pipetting mechanism is required to be configured to pipette the specimen and the reagent in a predetermined amount.

In the automatic analysis device, the mass of a liquid pipetted in one pipetting operation is as small as about 4 to 60 mg**.** Thus, it is difficult to accurately measure the mass of the pipetted liquid. If any abnormality occurs in the pipetting mechanism and analysis is performed without a predetermined pipetting amount available, a correct analysis result fails to be obtained.

Furthermore, the automatic analysis device includes various motors and movable portions in addition to the pipetting mechanism, leading to a problem that it is frequently subject to disturbance due to vibration. In order to accurately measure a mass of the pipetted specimen and a mass of the pipetted reagent without being subjected to the disturbance vibration, it is conceivable to install an anti-vibration table or the like and to provide an electronic balance or the like on the anti-vibration table. However, the anti-vibration table is so large that providing the anti-vibration table in the automatic analysis device is not practical due to an increase in size of the automatic analysis device. Under such circumstances, there is a demand for an automatic analysis device and a mass sensor that ensure reliability of analysis results by accurately pipetting a specimen and a sample in order to ensure the reliability of analysis results.

Citation List

Patent Literature

PTL 1: JP 2010-217048 A

Summary of Invention

Technical Problem

The present invention provides an automatic analysis device that can accurately pipette a specimen and a sample in a predetermined pipetting amount to ensure reliability of analysis results, and provides a mass sensor.

Solution to Problem

An automatic analysis device according to the present invention includes: a reagent holder configured to hold a reagent container that contains a reagent; a specimen holder configured to hold a specimen container that contains a specimen; a pipetting mechanism configured to pipette the reagent and the specimen into a reaction container; and a mass sensor configured to measure a mass of the reaction container. The mass sensor includes: a fixing portion; a diaphragm at least a part of which is fixed by the fixing portion; a piezoelectric element joined to the diaphragm; and a container placement portion that is supported on the diaphragm and is configured to hold the reaction container into which a liquid to be measured is discharged.

A mass sensor according to the present invention is a mass sensor configured to measure a mass of a liquid discharged into a reaction container, the mass sensor including: a fixing portion; a diaphragm at least a part of which is fixed by the fixing portion; a piezoelectric element joined to the diaphragm; and a container placement portion that is supported on the diaphragm and is configured to hold the reaction container into which a reagent and a specimen are discharged.

Advantageous Effects of Invention

According to the present invention, it is possible to provide an automatic analysis device that can accurately pipette a specimen and a sample in a predetermined pipetting amount to ensure reliability of analysis results and to provide a mass sensor.

Brief Description of Drawings

FIG. 1 is an overall schematic view of an automatic analysis device 1 according to a first embodiment.
FIG. 2 is a perspective view illustrating details of a configuration of a mass sensor 2.
FIG. 3 is a graph for explaining operation of the mass sensor 2.
FIG. 4 is a flowchart for explaining operation of the automatic analysis device 1 according to the first embodiment.
FIG. 5 is a flowchart for explaining operation of an automatic analysis device 1 according to a second embodiment.

Description of Embodiments

Hereinafter, present embodiments will be described with reference to the accompanying drawings. In the accompanying drawings, functionally identical elements may be denoted by the same or corresponding numbers. Note that, although the accompanying drawings illustrate the embodiments and implementation examples according to the principles of the present disclosure, these are used to facilitate understanding of the disclosure, not to limit interpretation of the disclosure. The description herein is exemplary only and is not intended to limit the claims or applications of the disclosure in any way.

In the present embodiments, the description is made in sufficient detail for those skilled in the art to implement the present disclosure. However, it is necessary to understand that other implementations and embodiments are possible, and that changes in configurations and structures and replacement of various elements are possible without departing from the scope and spirit of the technical idea of the disclosure. Therefore, the following description is not to be interpreted as limiting.

[First Embodiment]

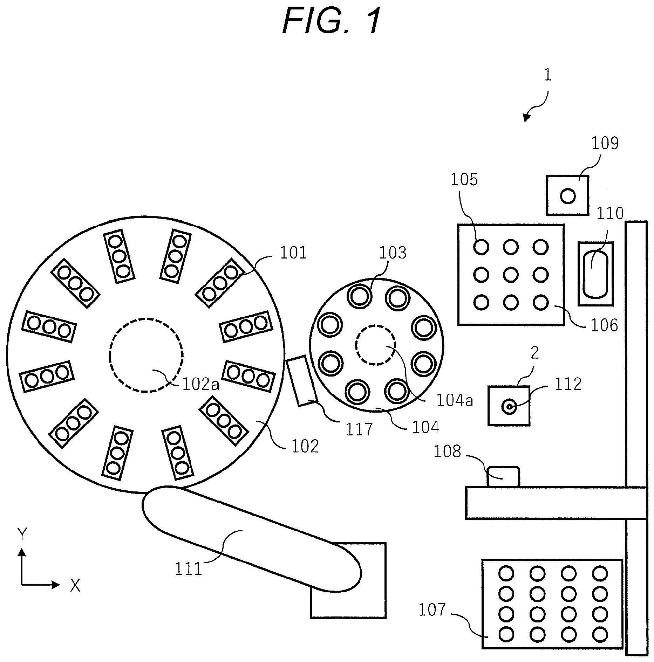

An overall configuration of an automatic analysis device 1 according to a first embodiment will be described with reference to FIG. 1. As an example, the automatic analysis device 1 mainly includes a reagent disk (reagent holder) 102, a specimen disk (specimen holder) 104, an incubator 106, a reaction container tray 107, a gripper 108, a detection unit 109, a reaction container disposal port 110, a pipetting mechanism 111, a mass sensor 2, and a cleaning tank 117.

The reagent disk 102 is a reagent holder that holds a reagent container 101 containing a reagent to be used for analysis. The specimen disk 104 is a specimen holder that holds a specimen container 103 containing a specimen as a test target. The reagent disk 102 and the specimen disk 104 are configured to be movable (for example, rotatable about a rotation axis) by moving mechanisms 102a and 104a, respectively. Movement of the reagent disk 102 and the specimen disk 104 allows the pipetting mechanism 111 to access the reagent container 101 and the specimen container 103 and to aspirate the reagent and the specimen (liquid). After aspiration, the pipetting mechanism 111 can access a reaction container 105 put at a discharge position 112 of the mass sensor 2 and discharge the aspirated liquid into the reaction container 105.

The incubator 106 has a function of promoting reaction under an environment in which the temperature of the reaction container 105 into which the reagent and the specimen are injected is adjusted to a constant temperature. The reaction container tray 107 holds an unused reaction container 105. The gripper 108 has a function of holding and conveying a reaction container 105 to the mass sensor 2, the detection unit 109, the reaction container disposal port 110, and the like. The detection unit 109 receives the reaction container 105 that has been in the incubator 106 for predetermined reaction duration, and analyzes the specimen. The reaction container disposal port 110 constitutes a disposal portion for disposal of the used reaction container 105 for which the analysis has been completed. The cleaning tank 117 can clean the pipetting mechanism 111. Cleaning can prevent a component from being carried over when a different liquid is pipetted.

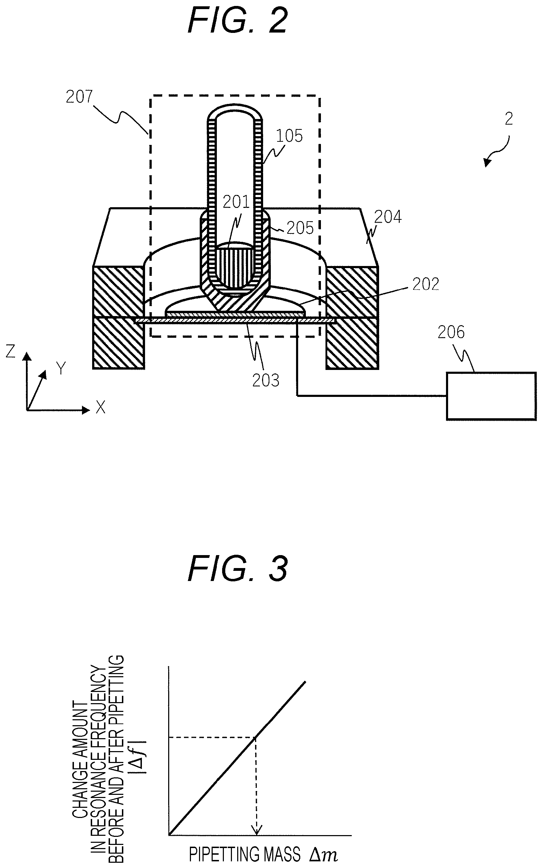

The mass sensor 2 is a measurement unit that measures the mass of a liquid discharged into the reaction container 105 put at the discharge position 112. FIG. 2 is a perspective view illustrating details of a configuration of the mass sensor 2. As an example, the mass sensor 2 includes a piezoelectric element 202, a diaphragm 203, a fixing portion 204, a container placement portion 205, and a controller 206.

As illustrated in FIG. 2, the piezoelectric element 202 can be joined to one surface or both surfaces of the diaphragm 203 having a disk shape as an example at a position concentric with the diaphragm 203. The piezoelectric element 202 is polarized in the thickness direction. When an alternating-current voltage is applied to electrodes formed on both surfaces of the piezoelectric element 202, expansion and contraction of the piezoelectric element 202 can cause flexural vibration in the diaphragm 203 with an antinode at the center position of the disk. Note that the diaphragm 203 can be made of a metal material such as aluminum or titanium.

The fixing portion 204 constitutes a base portion of the mass sensor 2. For example as illustrated in FIG. 2, the fixing portion 204 includes an upper fixing member and a lower fixing member, and can fix the diaphragm 203 by sandwiching an outer peripheral portion of the diaphragm 203 from above and below with the upper and lower fixing members. That is, the diaphragm 203 is configured to vibrate with the fixing portion 204 as a fixed end. The fixing portion 204 does not need to fix the entire circumference of the outer peripheral portion of the diaphragm 203 and may fix at least a part thereof as long as the diaphragm 203 can vibrate.

The container placement portion 205 is configured to hold a reaction container 105. Specifically, the container placement portion 205 includes a holding portion in which a reaction container 105 can be held, and is fixed at approximately the center of the diaphragm 203. In other words, the container placement portion 205 is installed at approximately the center of a flexural vibrator configured by bonding the piezoelectric element 202 and the diaphragm 203. The container placement portion 205 is installed on the diaphragm 203 so as to be able to vibrate together with the flexural vibration of the diaphragm 203. The container placement portion 205 is preferably fixed at a position where the vibration amplitude of the diaphragm 203 is approximately maximized when an alternating-current voltage of a predetermined frequency is applied to the piezoelectric element 202.

The controller 206 is connected to the electrodes of the piezoelectric element 202. The controller 206 functions as a power supply unit that supplies an alternating-current voltage to the piezoelectric element 202. In addition, the controller 206 constitutes a detection unit that detects a resonance frequency f of a resonance portion 207 constituted by the piezoelectric element 202, the diaphragm 203, the container placement portion 205, and a reaction container 105. Further, the controller 206 constitutes a mass calculation unit that calculates the mass of the reaction container 105 based on the detected resonance frequency. Detection of the absolute value |Δf| of a change amount in the resonance frequency before and after pipetting makes it possible to measure a change Δm in the mass before and after discharge, that is, the mass of a discharged liquid (see FIG. 3).

When the resonance portion 207 vibrates near a resonance frequency of a specific vibration mode, the vibration system can be approximated to a spring-mass-damper system with one degree of freedom. A resonance frequency fr at which the vibration speed v is maximized when a harmonic excitation force F is applied to the vibration system is expressed by the following [Mathematical Formula 1]. Here, k and m are an equivalent spring constant and an equivalent mass of the vibration system, respectively.

[Mathematical Formula 1]

$$f_r = \frac{1}{2\pi}\sqrt{\frac{k}{m}}$$

When the liquid is discharged into the reaction container 105 and the mass of the vibration system changes by Δm (pipetting mass), the change amount Δf in the resonance frequency fr is expressed by Mathematical Formula 2, provided that the pipetting mass Δm is sufficiently smaller than the mass m of the entire vibration system. Since the difference Δf in the resonance frequency before pipetting and after pipetting is proportional to the pipetting mass Δm, the pipetting mass Δm can be calculated based on the change amount Δf. Reaction containers 105 vary in mass due to manufacturing variation. The mass variation of reaction containers 105 is too large with respect to the pipetting mass to be ignored. Using the difference Δf in the resonance frequency before and after pipetting makes it possible to calculate the pipetting mass Δm while mitigating influence of the mass variation of reaction containers 105.

[Mathematical Formula 2]

$$\Delta f = -\frac{1}{4\pi}\frac{\sqrt{k}}{m\sqrt{m}}\Delta m$$

The resonance frequency fr utilized by the mass sensor 2 for measuring the pipetting amount is desirably equal to or higher than 1 kHz in order to avoid influence of disturbance vibration caused by operation of the automatic analysis device 1, and is desirably equal to or lower than 6 kHz that is the primary natural frequency of a reaction container 105 so that shape variation of reaction containers 105 can be ignored. By forming the diaphragm 203 and the piezoelectric element 202 into a disk shape and utilizing flexural vibration with the outer peripheral portion of the diaphragm 203 fixed, the resonance portion, having a small and lightweight configuration so as to be mountable on the automatic analysis device, can have a resonance frequency of 1 kHz to 6 kHz.

The gripper 108 places (attaches) the reaction container 105 in the container placement portion 205, and removes (detaches) it from the container placement portion 205. During attachment and detachment of the reaction container 105, a much larger external force than a load by the pipetting mass is applied to the mass sensor 2. The fixing portion 204 supporting the outer peripheral portion of the diaphragm 203 allows the load due to attachment and detachment of a reaction container 105 to be dispersed over the entire outer peripheral portion, leading to an effect of preventing the external force from damaging the diaphragm 203 and the piezoelectric element.

As described above, when a specified liquid amount is not pipetted into the reaction container 105 put at the discharge position 112 due to abnormal operation of the pipetting mechanism 111, the mass sensor 2 can detect abnormality in the pipetting amount for the reaction container 105 at the discharge position 112. Specifically, the controller 206 can determine whether the pipetting amount is normal or not according to a result of comparison between a predetermined discharge amount and a discharge amount calculated by the controller 206.

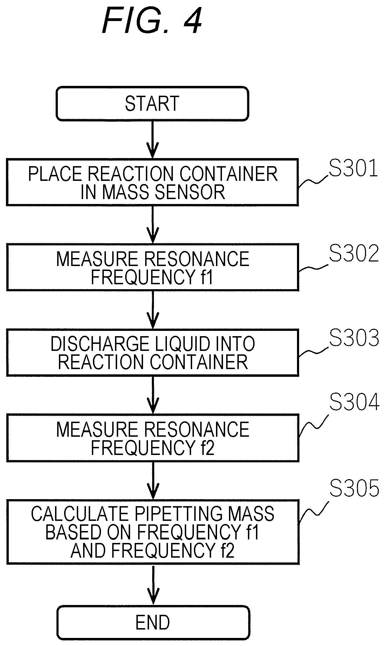

An operation of measuring the mass of a liquid pipetted into the reaction container 105 in the automatic analysis device 1 of the first embodiment will be described with reference to the flowchart of FIG. 4. When the automatic analysis device 1 performs automatic analysis, first, an empty reaction container 105 is placed in the container placement portion 205 of the mass sensor 2 (step S301). Then, the mass sensor 2 measures a resonance frequency f1 in a state where the empty reaction container 105 is placed (step S302).

Subsequently, a specimen and a reagent (liquid) are discharged into the reaction container 105 (step S303). Thereafter, the mass sensor 2 measures a resonance frequency f2 for the reaction container 105 after the discharge (step S304). Then, the mass ($\Delta m$) of the liquid discharged in step S303 is calculated based on the measured resonance frequencies f1 and f2 (step S305). In a case where the difference between the calculated mass and a predetermined discharge amount exceeds a threshold value, the controller 206 determines that the calculated discharge amount is abnormal, and can display the determination on a display or the like (not illustrated) to notify an operator.

In this manner, the automatic analysis device 1 of the first embodiment calculates the mass of a liquid discharged into the reaction container 105 based on the first resonance frequency of the resonance portion before discharge of the liquid into the reaction container and the second resonance frequency of the resonance portion after discharge of the liquid. The mass sensor 2 includes the fixing portion 204, the diaphragm 203 at least a part of which is fixed by the fixing portion 204, the piezoelectric element 202 joined to the diaphragm 203, and the container placement portion 205 that is supported on the diaphragm 203 and is configured to hold the reaction container 105. The resonance frequency f of the resonance portion 207 constituted by the piezoelectric element 202, the diaphragm 203, the container placement portion 205, and the reaction container 105 changes depending on the mass of a liquid pipetted into the reaction container 105. Thereby, the controller 206 can detect the mass of the pipetted liquid and abnormality by detecting the change in the resonance frequency f. With such a configuration, even if reaction containers 105 have manufacturing variation, it is possible to accurately measure the mass of a pipetted liquid without being affected by the manufacturing variation.

As described above, according to the automatic analysis device 1 and the mass sensor 2 of the first embodiment, it is possible to accurately pipette a specimen and a sample in a predetermined pipetting amount to ensure reliability of analysis results.

[Second Embodiment]

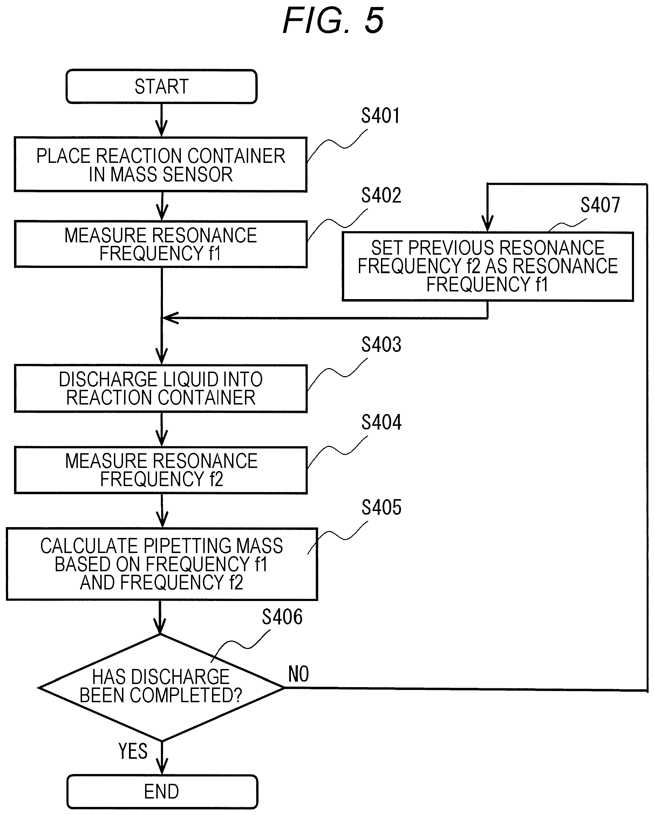

Next, an automatic analysis device according to a second embodiment will be described with reference to FIG. 5. In the automatic analysis device 1 of the second embodiment, an overall configuration may be similar to that of the first embodiment (FIG. 1), and a structure of a mass sensor 2 may also be the same (FIG. 2). However, the automatic analysis device 1 of the second embodiment is different from that of the first embodiment in the operation of measuring the mass of a liquid pipetted into a reaction container 105. Specifically, in the automatic analysis device 1 of the second embodiment, discharge of a liquid (specimen and reagent) is performed a plurality of times for one reaction container 105, and it is determined whether a discharge mass of the liquid in each discharge operation is normal.

The operation of measuring the mass of a liquid pipetted into a reaction container 105 in the automatic analysis device 1 of the second embodiment will be described with reference to the flowchart of FIG. 5. Steps S401 to 405 are the same as steps S301 to 305 of the first embodiment, and thus the overlapping description will be omitted here.

In step S406, when some of a plurality of discharge operations for one reaction container 105 mounted on the mass sensor 2 have not been completed and a liquid to be discharged remains (NO), the process proceeds to step S407, where the resonance frequency f2 from previous measurement is replaced with f1 (that is, the resonance frequency f2 after a discharge operation for the previous discharge/mass measurement is set as the resonance frequency f1 before a discharge operation for next measurement).

Subsequently, in step S403, another discharge of the liquid is executed for the reaction container 105, and the resonance frequency f2 after the discharge is newly measured (step S404). Then, a discharge mass of the liquid in the new discharge operation is calculated based on the resonance frequency f1 (before the new discharge operation) set in step S407 and the newly obtained resonance frequency f2 (step S405). The above processing is repeated until a specified number of discharge operations are completed.

As described above, in the automatic analysis device 1 of the second embodiment, a plurality of discharge operations are executed for one reaction container 105, and the mass sensor 2 measures a discharge mass in each of the plurality of discharge operations. Therefore, according to the second embodiment, it is possible to obtain the same effects as those of the first embodiment, and to more accurately manage discharge operations since each of a plurality of discharge operations is managed.

Although embodiments of the present invention have been described above, these embodiments have been presented as examples, and are not intended to limit the scope of the invention. These novel embodiments can be implemented in various other modes, and various omissions, substitutions, and changes can be made without departing from the gist of the invention. These embodiments and modifications thereof are included in the scope and gist of the invention, and are included in the invention described in the claims and the equivalent scope thereof.

Reference Signs List

|     |     |
| --- | --- |
| 1   | automatic analysis device |
| 2   | mass sensor |
| 101 | reagent container |
| 102 | reagent disk |
| 103 | specimen container |
| 104 | specimen disk |
| 105 | reaction container |
| 106 | incubator |
| 107 | reaction container tray |
| 108 | gripper |
| 109 | detection unit |
| 110 | reaction container disposal port |
| 111 | pipetting mechanism |
| 112 | discharge position |
| 117 | cleaning tank |
| 201 | discharged liquid |
| 202 | piezoelectric element |
| 203 | diaphragm |
| 204 | fixing portion |
| 205 | container placement portion |
| 206 | controller |
| 207 | resonance portion |

**Claims**

1.  An automatic analysis device comprising:

    a reagent holder configured to hold a reagent container that contains a reagent;
    a specimen holder configured to hold a specimen container that contains a specimen;
    a pipetting mechanism configured to pipette the reagent and the specimen into a reaction container; and
    a mass sensor configured to measure a mass of the reaction container,
    wherein the mass sensor includes:

    a fixing portion;
    a diaphragm at least a part of which is fixed by the fixing portion;
    a piezoelectric element joined to the diaphragm; and
    a container placement portion that is supported on the diaphragm and is configured to hold the reaction container into which a liquid to be measured is discharged.

2.  The automatic analysis device according to claim 1,

    wherein the diaphragm, the container placement portion, and the reaction container constitute a resonance portion,
    and
    a mass of the liquid discharged into the reaction container is calculated based on
    a first resonance frequency of the resonance portion before discharge of the liquid into the reaction container,
    and
    a second resonance frequency of the resonance portion after discharge of the liquid into the reaction container.

3.  The automatic analysis device according to claim 2, wherein the pipetting mechanism is configured to execute a plurality of discharge operations for the one reaction container, and the mass sensor is configured to measure the mass of the reaction container after each discharge operation, and
    the mass sensor is configured to, after each discharge operation among the plurality of discharge operations, set the second resonance frequency from previous measurement as the first resonance frequency and set the resonance frequency that is measured after a new discharge operation as the second resonance frequency.

4.  The automatic analysis device according to claim 1, wherein the diaphragm has a disk shape, and
    the fixing portion fixes at least a part of an outer peripheral portion of the diaphragm.

5.  The automatic analysis device according to any one of claims 1 to 4,
    wherein the container placement portion is fixed at approximately a center of the diaphragm.

6.  The automatic analysis device according to any one of claims 1 to 4,
    wherein the container placement portion is fixed at a position where a vibration amplitude of the diaphragm is approximately maximized when an alternating-current voltage of a predetermined frequency is applied to the piezoelectric element.

7.  A mass sensor configured to measure a mass of a liquid discharged into a reaction container, the mass sensor comprising:

    a fixing portion;
    a diaphragm at least a part of which is fixed by the fixing portion;
    a piezoelectric element joined to the diaphragm; and
    a container placement portion that is supported on the diaphragm and is configured to hold the reaction container into which a reagent and a specimen are discharged.

8.  The mass sensor according to claim 7,

    wherein the diaphragm, the container placement portion, and the reaction container form a resonance portion,
    and
    the mass of the liquid discharged into the reaction container is calculated based on

a first resonance frequency of the resonance portion before discharge of the liquid into the reaction container, and

a second resonance frequency of the resonance portion after discharge of the liquid into the reaction container.

9. The mass sensor according to claim 8, wherein a pipetting mechanism is configured to execute a plurality of discharge operations for the one reaction container, and the mass sensor is configured to measure a mass of the reaction container after each discharge operation, and

the mass sensor is configured to, after each discharge operation among the plurality of discharge operations, set the second resonance frequency from previous measurement as the first resonance frequency and set the resonance frequency that is measured after a new discharge operation as the second resonance frequency.

10. The mass sensor according to claim 7, wherein the diaphragm has a disk shape, and

the fixing portion fixes at least a part of an outer peripheral portion of the diaphragm.

11. The mass sensor according to any one of claims 7 to 10,

wherein the container placement portion is fixed at approximately a center of the diaphragm.

12. The mass sensor according to any one of claims 7 to 10,

wherein the container placement portion is fixed at a position where a vibration amplitude of the diaphragm is approximately maximized when an alternating-current voltage of a predetermined frequency is applied to the piezoelectric element.

# FIG. 1

# FIG. 2

# FIG. 3

# FIG. 4

```
                    ┌─────────────────────┐
                    │        START        │
                    └─────────────────────┘
                               │
                               ▼
          ┌──────────────────────────────────┐     S301
          │   PLACE REACTION CONTAINER       │
          │        IN MASS SENSOR            │
          └──────────────────────────────────┘
                               │
                               ▼
          ┌──────────────────────────────────┐     S302
          │      MEASURE RESONANCE           │
          │        FREQUENCY f1             │
          └──────────────────────────────────┘
                               │
                               ▼
          ┌──────────────────────────────────┐     S303
          │     DISCHARGE LIQUID INTO         │
          │      REACTION CONTAINER          │
          └──────────────────────────────────┘
                               │
                               ▼
          ┌──────────────────────────────────┐     S304
          │      MEASURE RESONANCE           │
          │        FREQUENCY f2             │
          └──────────────────────────────────┘
                               │
                               ▼
          ┌──────────────────────────────────┐     S305
          │    CALCULATE PIPETTING MASS       │
          │    BASED ON FREQUENCY f1         │
          │      AND FREQUENCY f2            │
          └──────────────────────────────────┘
                               │
                               ▼
                    ┌─────────────────────┐
                    │         END         │
                    └─────────────────────┘
```

# FIG. 5

START

PLACE REACTION CONTAINER
IN MASS SENSOR                    S401

MEASURE RESONANCE
FREQUENCY f1                     S402

SET PREVIOUS RESONANCE
FREQUENCY f2 AS RESONANCE
FREQUENCY f1                     S407

DISCHARGE LIQUID INTO
REACTION CONTAINER               S403

MEASURE RESONANCE
FREQUENCY f2                     S404

CALCULATE PIPETTING MASS
BASED ON FREQUENCY f1
AND FREQUENCY f2                 S405

HAS DISCHARGE
BEEN COMPLETED?          NO       S406

YES

END

## INTERNATIONAL SEARCH REPORT

| International application No. |
|---|
| **PCT/JP2023/038372** |

| A. | CLASSIFICATION OF SUBJECT MATTER |
|---|---|

*G01G 3/16*(2006.01)i; *G01N 35/04*(2006.01)i; *G01N 35/10*(2006.01)i
FI:    G01N35/10 D; G01N35/04 G; G01G3/16

According to International Patent Classification (IPC) or to both national classification and IPC

| B. | FIELDS SEARCHED |
|---|---|

Minimum documentation searched (classification system followed by classification symbols)

G01G3/16; G01N35/04; G01N35/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 61-161129 A (TECHNICON INSTR. CORP.) 21 July 1986 (1986-07-21)<br>page 3, lower left column, line 3 to page 5, lower right column, line 17, fig. 2 | 1-12 |
| Y | JP 2022-100417 A (HITACHI HIGH-TECH CORP.) 06 July 2022 (2022-07-06)<br>paragraphs [0016]-[0024], [0118]-[0119] | 1-12 |
| Y | JP 62-211526 A (SARTORIUS GMBH) 17 September 1987 (1987-09-17)<br>fig. 2 | 4-5, 10-11 |
| A | US 2020/0025601 A1 (ADVANCED WAVE SENSORS, S.L.) 23 January 2020 (2020-01-23)<br>paragraphs [0032]-[0047] | 1-12 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/038372**

| Patent document cited in search report | | | Publication date (day/month/year) | Patent family member(s) | | | Publication date (day/month/year) |
|---|---|---|---|---|---|---|---|
| JP | 61-161129 | A | 21 July 1986 | US | 4610546 | A | |
| | | | | column 3, line 43 to column 7, line 2 | | | |
| | | | | EP | 187324 | A1 | |
| | | | | CA | 1259064 | A | |
| | | | | AU | 5167785 | A | |
| JP | 2022-100417 | A | 06 July 2022 | WO | 2020/188925 | A1 | |
| JP | 62-211526 | A | 17 September 1987 | GB | 2187562 | A | |
| | | | | fig. 2 | | | |
| | | | | DE | 3607491 | C1 | |
| | | | | FR | 2595466 | A1 | |
| | | | | CH | 672842 | A5 | |
| US | 2020/0025601 | A1 | 23 January 2020 | WO | 2018/146348 | A1 | |
| | | | | CN | 110268236 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010217048 A